# EUROPEAN PATENT APPLICATION

(11) **EP 2 479 631 A2**
(43) Date of publication of application: **25.07.2012**
(21) Application number: 12382007.8
(22) Date of filing: 12.01.2012
(51) Int. Cl.: G05B 23/02

(54) **Method for detecting and identifying errors in manufacturing processes**

(30) Priority: 25.01.2011 ES 201130082
(71) Applicant: Mondragon Goi Eskola Politeknikoa Jose Maria Arizmendiarrieta, S.COOP., 20500 Arrasate-Mondragon (ES)
(72) Inventor: Arana Arexolaleiba, Nestor, 20540 Eskoriatza (ES); Saenz de Argandoña Fernandez de Gorostiza, Eneko, 01013 Vitoria-Gasteiz (ES); Carcía Crespo, Carlos, 20500 Mondragon (ES); Izaguirre Altuna, Alberto, 20550 Aretxabaleta (ES); Aztiria Goenaga, Asier, 20730 Azpeitia (ES)
(74) Representative: Igartua, Ismael

(57) **Abstract**

Method for detecting and identifying errors in manufacturing processes, wherein the development of at least one monitoring signal of said process associated to a reading parameter of the process is monitored, an operating area for said signal is delimited, and an error is detected in the process if said signal moves out of said area. A plurality of error parameters of the monitoring signal to be calculated when an error is detected are predetermined, and a multi-dimensional space with a number of dimensions proportional to the number of predetermined error parameters is predetermined. When an error is detected, the value of said parameters is determined, said values are linked together, an error value being obtained, a spatial position of said error value is determined in the multi-dimensional space, and an error type associated to said spatial position is determined.

## Description

### TECHNICAL FIELD

The invention relates to methods for detecting and identifying errors in manufacturing processes.

### PRIOR ART

Diagnosis methods for manufacturing processes being capable of automatically identifying errors during the process are well known from prior art. For this purpose they are generally based on the data received by sensors that determine reading parameters such as the cutting force, the consumption of a particular tool (or related motor), noise emissions, vibrations, etc, which depend to a large extent on the process where the method is implemented.

Methods of this type are disclosed, for example, in the patent documents WO2007008940A2 (which relates specifically to robotics processes) and WO03052533A1 (which relates specifically to stamping processes). However, said methods are not adapted for identifying new error types.

Other known methods have been adapted for identifying new errors, such as the one disclosed in document US5566092A. This method is based on neuronal networks, and as such estimates, rather than learns, the probability of a new error being identified.

Patent document WO0031510A1 discloses a diagnosis method that comprises two operating modes: a learning mode and a diagnosis mode. In said method one of the two modes is implemented each time, as it is not possible to combine the two modes.

### BRIEF DISCLOSURE OF THE INVENTION

It is an object of the invention to provide a method for detecting and identifying errors in manufacturing processes, as described in the claims.

The method for detecting and identifying errors in manufacturing processes of the invention is used to monitor the development of at least one monitoring signal associated to a reading parameter of said process, a standard operating area is delimited for said monitoring signal, between an upper limit and a lower limit, and an error is detected in the process if said monitoring signal moves out of said operating area.

The method of the invention is used to predetermine a plurality of error parameters to be calculated when an error is detected, linked to the part of the monitoring signal that moves out of the operating area, and predetermined a multi-dimensional space with a number of dimensions proportional to the number of predetermined parameters.

In the method of the invention, when an error is detected the following operations are also carried out:
- the value of the corresponding predetermined error parameters is determined;
- said predetermined values are linked together in a specific way, an error value being obtained as a result;
- a spatial position of said error value is determined in the predetermined multi-dimensional space; and
- an error type associated to said error value is determined according to said spatial position.

Thus, an error can be detected during a manufacturing process in a quick and simple manner, while the error type to which said error belongs is indicated, a typical solution being possible to be associated and indicated, for example, a solution (or a range of possible solutions) for each error type, as a result of which the user can resolve it in a more rapid and simpler manner. Therefore, the method of the invention also learns as it monitors, and thus becomes increasingly more accurate system over time.

These and other advantages and characteristics of the invention will be made evident in the light of the drawings and the detailed description thereof.

### DESCRIPTION OF THE DRAWINGS

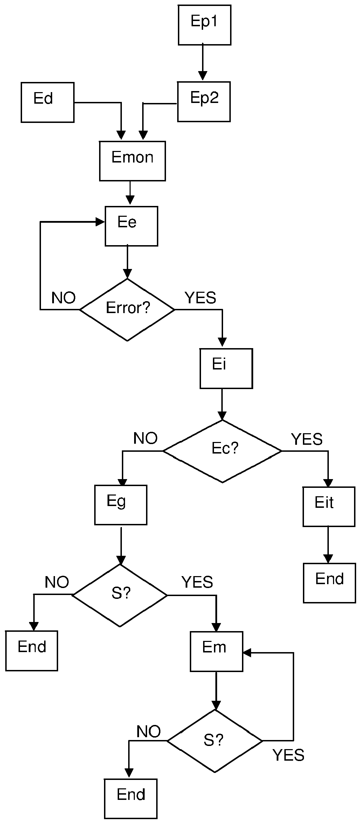

Figure 1 shows a flow diagram indicative of an embodiment of the method of the invention.

### DETAILED DISCLOSURE OF THE INVENTION

Figure 1 shows an embodiment, in the form of flow diagrams, of the method of the invention. The method for detecting and identifying errors in manufacturing processes comprises the following steps of monitoring the development of at least one monitoring signal of said process linked to a reading parameter that is detected by means of at least one sensor (stage Emon), delimiting a standard operating area for said monitoring signal (stage Ed, carried out only when a new reading parameter is included for the first time, and carried out only for said reading parameter) between an upper limit and a lower limit, and detecting or determining that there is an error in the process if said monitoring signal moves out of said operating area (stage Ee). In a process there generally exists a plurality of sensors disposed along the different workstations involved, or in the only workstation should this be the case, to detect the value of some reading parameters, and a monitoring signal associated to each sensor is monitored according to the respective values of the reading parameter at each point. Said sensors can be, for example, force sensors to detect the force exerted by the various tools and/or to detect the force applied at various points of the process, and acoustic sensors to detect the noise generated at different points of the process. It is clear that instead of these sensors, or in addition to these sensors, other sensors can be used to determine other parameters, for example.

The method also comprises the steps of predetermining or preselecting a plurality of error parameters to be taken into account and linked to the part of the monitoring signal that moves out of the operating area (stage Ep1, carried out only when the method to be implemented is started for the first time, or when a user wishes to modify the preselected error parameters), and of generating a multi-dimensional space (stage Ep2, which occurs when stage Ep1 occurs), with as many dimensions as there are preselected error parameters, in other words there is a dimension that corresponds to each preselected error parameter. Preferably, the multi-dimensional space can be represented in a matrix manner, corresponding with a matrix that comprises on the one hand as many rows and columns as there are preselected parameters, and on the other as many columns or lines as there are sensors used to determine the monitoring signal, said matrix therefore comprising an equal number of dimensions to the result of the multiplication of the number of sensors used and the number of preselected parameters. As a result, in a single matrix can be grouped together all the monitoring signals (each sensor with its corresponding reading parameter).

Preferably the preselected error parameters correspond at least with:
- the area of the part of the monitoring signal that is outside the operating area,
- the initial moment in which said area moves out of the operating area,
- the moment in which said area moves back into said operating area,
- the vertical centre of gravity of said area,
- the vertical centre of horizontal of said area,
- the sign of said area, it being determined whether it has moved out through the upper part of the operating area or the lower part,
- the amplitude of said area, and
- the initial angle of said area.

If it is determined that at least one of the monitoring signals moves out of the corresponding operating area, an error is thus indicated. When an error is detected, the method of the invention is used to determine the value of the preselected error parameters of said monitoring signal and said calculated values are linked together in a certain manner (stage Ei), preferably generating a matrix, as mentioned above, where the corresponding value according to the parameter and the specific sensor determined in each case is applied and which comprises as many dimensions as the multi-dimensional space, said matrix corresponding with an error value.

The error value thus comprises a matrix of as many dimensions as the multi-dimensional space, and a spatial position of said error value is determined in said predetermined multi-dimensional space (in stage Ei). According to said spatial position an error type associated to said error value is determined, and one or more possible solutions to said error can be indicated or proposed. If there is more than one solution, the correct solution can be proposed in order of greater probability, for example.

An error can thus be detected during a manufacturing process in a quick and simple manner, while the error type to which said error belongs is indicated, a typical solution being linked and indicated, for example, (or a range of possible solutions) for each error type, as a result of which the user can resolve it in a more rapid and simpler manner.

Preferably each error type is associated to a closed error environment that encompasses a plurality of positions inside the multi-dimensional space, so that if an error value is inside said error environment, said error type is identified as associated to said error value. Error values involving different spatial positions can thus result in a single error type. Similarly, each error type can be also be associated to different error environments.

When an error is detected and the error value obtained does not have an error type associated to it, an evaluation or analysis is made of whether or not the error is known in an evaluation stage Ec, with two different situations possibly arising:
1. Following analysis of the error, a known error type is identified. In this case, the error environment associated to said error type is enlarged in order to cover said error value in the future, or a new error environment associated to said error type is generated to cover said error type if it is not possible to enlarge an existing error environment without invading other error environments. The amplitude of said error environment can be set beforehand for these cases, it being given the same automatic and predetermined amplitude in all the cases in which an error environment of this type must be generated. If when an error environment is generated said error environment is superimposed with another error environment generated beforehand, both error environments are modified proportionally, the spatial position corresponding to the error value from which said error environments have been generated being maintained in this case as the centre of said modified error environments, so that no error environment is superimposed with any other error environment that has a different error type associated to it. The amplitude of the new error environment and of the error environment generated beforehand corresponds with the subtraction of the centre of said error environment generated beforehand and the error value obtained, divided by two. In Figure 1 this case scenario has been included in a stage Eit.
2. Following analysis of the error, an unknown error type is identified. In this case a new error environment is generated in a generation stage Eg, the error value, the position of said error value, being the centre of said error environment. The amplitude of said error environment can be set beforehand for these cases, it being given the same automatic and predetermined amplitude in all the cases in which a new error type is detected. Said predetermined amplitude can be equal or otherwise to the amplitude of the previous point. As a result, all the error values that are spatially close to said error value are associated to a single error type. If when an error environment is generated said error environment is superimposed with another error environment generated beforehand (reference S in the figure), both error environments are modified proportionally in a modification stage Em, the spatial position corresponding to the error value from which said error environments have been generated being maintained in each case as the centre of said modified error environments, so that no error environment is superimposed with any other error environment that has a different error type associated to it. The amplitude of the new error environment and of the error environment generated beforehand corresponds with the subtraction of the centre of said error environment generated beforehand and the error value obtained, divided by two. In this case an entry is also requested from the user so that they can indicate the new error type determined for said error value obtained (and for said new error environment generated), said error value being associated to said error type introduced by the user for the future.

Similarly, an entry indicating at least one typical solution for said error type can also be requested, which in the future will be indicated along with the error type. As a result, the method is able to learn new error types and/or new solutions to new error types and/or known error types.

When an error is detected and the error value obtained has an error type associated to it, it can be the case that the user is not in agreement. In such cases, therefore, the method provides the possibility for said user, to modify the error type associated to said error value and/or the standard solution (or standard solutions) associated to said error type, in which case a new error environment is also generated in the same way as mentioned above (second case).

In the method of the invention the detection of an error can be instantaneous, an error being detected or indicated when at least one of the monitoring signals moves out of its operating area, or can be periodic, an error being indicated if it is detected that, during a predetermined time period, at least one of the monitoring signals has moved out of its monitoring area. In this latter case it can be the case that a single monitoring signal has moved out of the operating area on more than one occasion, and the values of the predetermined error parameters are obtained by taking into account that part of the monitoring signal, from among those that have moved out of said operating area, which comprises a greater area outside said operating area.

## Claims

1. Method for detecting and identifying errors in manufacturing processes, wherein the development of at least one monitoring signal of said process associated to a reading parameter of the process is monitored, a standard operating area is delimited for said monitoring signal between an upper limit and a lower limit, and an error is detected in the process if said monitoring signal moves out of said operating area,
**characterised in that** a plurality of error parameters to be calculated when an error is detected are predetermined, the error parameters being linked to the part of the monitoring signal that moves out of the operating area, and a multi-dimensional space with a number of dimensions proportional to the number of predetermined parameters is predetermined, and
**in that,** when an error is detected, the value of the corresponding predetermined error parameters is determined, said preset values are linked together in a specific way as a result of which an error value is obtained, a spatial position of said error value is determined in the predetermined multi-dimensional space, and an error type associated to said error value is determined according to said spatial position.

2. Method according to claim 1, wherein the monitoring signal is generated from detections carried out by at least one sensor which detects at least one parameter of the process, the multi-dimensional space being formed by a matrix comprising a number of dimensions equal to the result of the multiplication between the number of sensors used in the process and the number of predetermined parameters.

3. Method according to claim 2, wherein the error value obtained corresponds with a matrix comprising as many dimensions as those comprised in the multi-dimensional space.

4. Method according to any of the preceding claims, wherein each error type is associated to an error environment, so that if an error value is inside said error environment, said error type is identified as associated to said error value.

5. Method according to claim 4, wherein when an error is detected and the error value obtained is not related to any error type, the possible error type is analysed and it is determined whether said error type is known, an existing error environment related to said error type is enlarged in order to include the spatial position corresponding to said error value, or a new error environment related to said error type is created to include the spatial position corresponding to said error value if it is not possible to enlarge an existing error environment without invading at least one other error environment, said spatial position being the centre of said new error environment.

6. Method according to either of claims 4 or 5, wherein when an error is detected and the error value obtained does not have an error type related to it, there is generated, in the multi-dimensional space, an error environment related to a new error type and to said error value, the spatial position corresponding to said error value being the centre of said new error environment and said new error environment comprising a predetermined amplitude, said error value and all error values falling within said error environment being related to said error type.

7. Method according to claim 6, wherein if when an error environment is generated said error environment is superimposed with another error environment generated beforehand, both error environments are modified proportionally, the spatial position corresponding to the error value from which said error environments have been generated being maintained in this case as the centre of said modified error environments, so that no error environment is superimposed with any other error environment that has a different error type associated to it.

8. Method according to claim 7, wherein the amplitude of the new error environment and the error environment generated beforehand corresponds with the subtraction of the centre of said error environment generated beforehand and the error value obtained, divided by two.

9. Method according to any of claims 6 to 8, wherein when an error is detected and the error value obtained is not related to any error type, an entry is requested from the user so that they can indicate an error type for said error value obtained, said error value being related to said error type entered by the user.

10. Method according to any of claims 5 to 9, wherein when an error is detected and the error value obtained is not related to any error type, an entry is requested from the user so that they can indicate an error type for said error value obtained and at least one solution for said error type, said error value being related to said error type and to said solution.

11. Method according to any of claims 4 to 10, wherein when an error is detected and the error value obtained is related to a specific error type, said error type is indicated and a user can modify the error type related to said error value obtained, there being generated, in the multi-dimensional space, a new spatial error environment related to the new error type indicated by said user for said error value, said error environment being delimited by a specific radius around said specific error value.

12. Method according to claim 11, wherein when an error environment is generated, the error environment related beforehand to the error value obtained is modified, so that no error environment is superimposed with any other error environment.

13. Method according to any of claims 4 to 12, wherein when an error is detected and the error value obtained is related to a specific error type, the error type and at least one possible solution are indicated.

14. Method according to any of the preceding claims, wherein the predetermined error parameters comprise the area of the part of the monitoring signal that is outside the operating area, the initial moment in which said area moves out of the operating area, the moment in which said area moves back into said operating area; the vertical centre of gravity of said area, the vertical centre of horizontal of said area, the sign of said area, it being determined whether it has moved out through the upper part of the operating area or the lower part, the amplitude of said area, and the initial angle of said area.

15. Method according to claim 14, wherein if the monitoring signal moves out of the operating area on more than one occasion, the values of the predetermined parameters are obtained by taking into account that part of the monitoring signal, from among those that have moved out of said operating area, which comprises a greater area outside said operating area.
